# EUROPEAN PATENT APPLICATION

(11) **EP 1 795 832 A1**
(43) Date of publication of application: **13.06.2007**
(21) Application number: 05781389.1
(22) Date of filing: 02.09.2005
(51) Int. Cl.: F25B 1/00, F25B 1/10

(54) **REFRIGERATING APPARATUS**

(30) Priority: 02.09.2004 JP 2004255303
(71) Applicant: DAIKIN INDUSTRIES, LTD., Osaka-shi, Osaka 530-8323 (JP)
(72) Inventor: SAKAE, Satoru c/o Kanaoka Factory Sakai Plant, Sakai-shi, Osaka 5918511 (JP); MEZAKI, Takenori c/o Kanaoka Factory, Sakai Plant, Sakai-shi, Osaka 5918511 (JP); TAKEGAMI, Masaaki c/o Kanaoka Factory, Sakai Plant, Sakai-shi, Osaka 5918511 (JP); NOMURA, Kazuyoshi c/o Kanaoka Factory, Sakai Plant, Sakai-shi, Osaka 5918511 (JP); KONDO, Azuma c/o Kanaoka Factory, Sakai Plant, Sakai-shi, Osaka 5918511 (JP); ODA, Yoshinari c/o Kanaoka Factory, Sakai Plant, Sakai-shi, Osaka 5918511 (JP)
(74) Representative: HOFFMANN EITLE
(86) International application number: PCT/JP2005/016123
(87) International publication number: WO 2006/025530

(57) **Abstract**

A pressure regulating valve (**71**) is connected to the discharge side of a low stage compressor (**55**) to make the pressure in the suction side of high stage compressors (**11, 12**) lower than the pressure in a dome of the low stage compressor (**55**). Further, an oil return path (**72**) is connected to the dome of the low stage compressor (**55**) at one end and to the suction side of the high stage compressors (**11, 12**) by bypassing the pressure regulating valve (**71**) at the other end. With this configuration, refrigeration oil accumulated in the dome of the low stage compressor (**55**) is returned to the high stage compressors (**11, 12**).

## Description

### TECHNICAL FIELD

The present invention relates to a refrigeration system having a refrigerant circuit including a low stage compressor and a high stage compressor which are connected in series to perform a two-stage compression refrigeration cycle. In particular, the invention relates to a mechanism for returning refrigeration oil to the compressor.

### BACKGROUND ART

A common example of conventional refrigeration systems performs a vapor compression refrigeration cycle by circulating a refrigerant in a refrigerant circuit. Another known example of the refrigeration system of this kind executes a two-stage compression refrigeration cycle by compressing the refrigerant in two stages.

The two-stage compression refrigeration system includes a low stage compressor and a high stage compressor. A low pressure gaseous refrigerant from an evaporator is sucked into the low stage compressor and compressed to intermediate pressure. Then, the refrigerant discharged from the low stage compressor is delivered to the high stage compressor for further compression. The refrigerant discharged out of the high stage compressor is then sent to a condenser. Thus, the refrigeration cycle is performed.

The refrigerant used in the refrigeration system is likely to dissolve refrigeration oil used for lubricating the compressors. Therefore, the refrigeration oil contained in the refrigerant gas discharged from the compressor is dissolved into condensate in the condenser. When the refrigerant liquid flows into the evaporator and evaporates therein, the oil is separated. However, unless the piping is designed for easy return of the oil to the compressor, the oil remains accumulated in a low pressure part of the refrigerant circuit. In this case, the compressors are not lubricated enough, which leads to seizing of them.

For example, Patent Publication 1 discloses a refrigeration system which includes an oil separator and an oil return path. The oil separator separates the refrigeration oil from the refrigerant discharged from the high stage compressor and the oil return path returns the refrigeration oil to each of the high and low stage compressors.

Further, Patent Publication 2 discloses another refrigeration system which includes a gas-liquid separator and an oil return path. The gas-liquid separator separates the refrigeration oil from the refrigerant discharged from the low stage compressor and the oil return path returns the refrigeration oil from the gas-liquid separator to the low stage compressor.
Patent Publication I: Publication of Unexamined Japanese Patent Application No. H7-260263
Patent Publication 2: Pamphlet of International Publication No. 02/46663

### DISCLOSURE OF THE INVENTION

### Problem that the Invention is to Solve

For both of the refrigeration systems according to Patent Publications 1 and 2, it is impossible to return the refrigeration oil accumulated in the low stage compressor to the high stage compressor. Therefore, it is necessary to fill additional refrigeration oil to prevent the high stage compressor from seizing caused by the deficiency of the refrigeration oil in the high stage compressor. Therefore, time and effort are required to fill the refrigeration oil, which is disadvantageous from the aspect of cost.

The present invention has been achieved in view of the foregoing problem. An object of the present invention is to provide a simple structure that makes it possible to distribute the refrigeration oil between the low and high stage compressors, thereby lubricating the compressors with a minimum amount of the refrigeration oil and preventing failure from occurring.

### Means of Solving the Problem

In order to achieve the above-described object, according to the configuration of the present invention, refrigeration oil is returned from a low stage compressor (**55**) to high stage compressors (**11, 12**).

More specifically, a first aspect of the present invention is directed to a refrigeration system (**1**) having a refrigerant circuit (**6**) including a low stage compressor (**55**) and high stage compressors (**11, 12**) which are connected in series to perform a two-stage compression refrigeration cycle.

The refrigeration system (**1**) further includes an oil return means (**70**) for returning refrigeration oil from the low stage compressor (**55**) to the high stage compressors (**11, 12**).

To be more specific, in the refrigeration system (**1**) including the refrigerant circuit (**6**) which performs the two-stage compression refrigeration cycle, the refrigeration oil for lubricating the compressors (**11, 12, 55**) is likely to accumulate in the low stage compressor (**55**) where the pressure is low. With the above-described configuration, the refrigeration oil accumulated in the low stage compressor (**55**) is returned to the high stage compressors (**11, 12**) by the oil return means (**71**).

According to a second aspect of the invention related to the first aspect, the low stage compressor (**55**) is configured to accumulate the refrigerant oil in a high-pressure part thereof and the oil return means (**70**) is configured to return the refrigeration oil accumulated in the high-pressure part of the low stage compressor (**55**) to the high stage compressors (**11, 12**).

With this configuration, the refrigeration oil is returned from the high-pressure part of the low stage compressor (**55**) where it accumulates to the high stage compressors (**11, 12**) by the oil return means (**70**).

According to a third aspect of the invention related to the second aspect, the oil return means (**70**) is provided on the discharge side of the low stage compressor (**55**) and includes a pressure reducing means (**71**) and an oil return path (**72**). The pressure reducing means (**71**) makes the pressure in the suction side of the high stage compressors (**11, 12**) lower than the pressure in the high-pressure part of the low stage compressor (**55**) and the oil return path (**72**) is connected to the high pressure part of the low stage compressor (**55**) at one end and to the suction side of the high stage compressors (**11, 12**) by bypassing the pressure reducing means (**71**) at the other end.

With this configuration, the pressure reducing means (**71**) makes the pressure in the suction side of the high stage compressors (**11, 12**) lower than the pressure in the high-pressure part of the low stage compressor (**55**). Therefore, the refrigeration oil accumulated in the high-pressure part of the low stage compressor (**55**) is ejected to the suction side of the high stage compressors (**11, 12**) through the oil return path (**72**) bypassing the pressure reducing means (**71**).

According to a fourth aspect of the invention related to the first aspect, the low stage compressor (**55**) is configured to accumulate the refrigeration oil in a dome thereof where the pressure is high and the oil return means (**70**) is configured to return the refrigeration oil accumulated in the dome of the low stage compressor (**55**) to the high stage compressors (**11, 12**).

With this configuration, the refrigeration oil is returned from the dome of the low stage compressor (**55**) where it accumulates to the high stage compressors (**11, 12**) by the oil return means (**70**).

According to a fifth aspect of the invention related to the fourth aspect, the oil return means (**70**) is provided on the discharge side of the low stage compressor (**55**) and includes a pressure reducing means (**71**) and an oil return path (**72**). The pressure reducing means (**71**) makes the pressure in the suction side of the high stage compressors (**11, 12**) lower than the pressure in the dome of the low stage compressor (**55**) and the oil return path (**72**) is connected to the dome of the low stage compressor (**55**) at one end and to the suction side of the high stage compressors (**11, 12**) by bypassing the pressure reducing means (**71**) at the other end.

With this configuration, the pressure reducing means (**71**) makes the pressure in the suction side of the high stage compressors (**11, 12**) lower than the pressure in the dome of the low stage compressor (**55**). Therefore, the refrigeration oil accumulated in the dome of the low stage compressor (**55**) is ejected to the suction side of the high stage compressors (**11, 12**) through the oil return path (**72**) bypassing the pressure reducing means (**71**).

According to a sixth aspect of the invention related to the second, third, fourth or fifth aspect, the low stage compressor (**55**) includes a plurality of low stage compressors (**55a, 55b, 55c**) connected parallel to each other, the oil return means (**70**) is configured to return the refrigeration oil from one of the low stage compressors (**55a**) to the high stage compressors (**11, 12**), the one of the low stage compressors (**55a**) being in charge of returning the refrigeration oil to the high stage compressors (**11, 12**), and the oil return means (**70**) includes oil delivery paths (**67a**, **67b**) for sending the refrigeration oil to the low stage compressor (**55a**) in charge from the other low stage compressors (**55b, 55c**) than the low stage compressor (**55a**) in charge.

With this configuration, the refrigeration oil accumulated in the other low stage compressors (**55b, 55c**) than the low stage compressor (**55a**) in charge is sent to the low stage compressor (**55a**) through the oil delivery paths (**67a, 67b**). Then, the refrigeration oil in the low stage compressor (**55a**) in charge is returned to the high stage compressors (**11, 12**). That is to say, according to the sixth aspect of the invention, the refrigeration oil is gathered in the low stage compressor (**55a**) in charge, and then returned to the high stage compressors (**11, 12**).

According to a seventh aspect of the invention related to the first aspect, an oil separator (**64**) is provided on the discharge side of the low stage compressor (**55**) to trap the refrigeration oil discharged from the low stage compressor (**55**) and the oil return means (**70**) includes a pressure reducing means (**71**) and an oil return path (**72**). The pressure reducing means (**71**) is closer to the high stage compressors (**11, 12**) than to the oil separator (**64**) to make the pressure in the suction side of the high stage compressors (**11, 12**) lower than the pressure in the oil separator (**64**) and the oil return path (**72**) is connected to the oil separator (64) at one end and to the suction side of the high stage compressors (**11, 12**) by bypassing the pressure reducing means (**71**) at the other end.

With this configuration, the pressure reducing means (**71**) makes the pressure in the suction side of the high stage compressors (**11, 12**) lower than the pressure in the oil separator (**64**). Therefore, the refrigeration oil trapped in the oil separator (**64**) is ejected to the suction side of the high stage compressors (**11, 12**) through the oil return path (**72**) bypassing the pressure reducing means (**71**). Thus, the refrigeration oil is returned from the low stage compressor (**55**) to the high stage compressors (**11, 12**).

### EFFECT OF THE INVENTION

As described above, according to the present invention, the refrigeration system (**1**) including the refrigerant circuit (**6**) which performs the two-stage compression refrigeration cycle is configured such that the refrigeration oil, which is likely to accumulate in the low stage compressor (**55**) where the pressure is low, is returned from the low stage compressor (**55**) to the high stage compressors (**11, 12**) by the oil return means (**70**). Therefore, the high stage compressors (**11, 12**) will never be short of the refrigeration oil, thereby eliminating the need of filling additional refrigeration oil and saving time and effort to fill the refrigeration oil. Further, since the refrigeration oil is prevented from being accumulated in the low stage compressor (**55**), rotational resistance caused by the refrigeration oil in the low stage compressor (**55**) is reduced. Thus, the system is operated with improved efficiency.

According to the third aspect of the invention described above, the pressure reducing means (**71**) is provided on the discharge side of the low stage compressor (**55**) and the pressure in the suction side of the high stage compressors (**11, 12**) is made lower than the pressure in the high-pressure part of the low stage compressor (**55**). Further, the oil return path (**72**) is connected to the high-pressure part of the low stage compressor (**55**) at one end and to the suction side of the high stage compressors (**11, 12**) by bypassing the pressure reducing means (**71**) at the other end such that the refrigeration oil accumulated in the high-pressure part of the low stage compressor (**55**) is returned to the high stage compressors (**11, 12**). With such a simple structure, time and effort to additionally fill the refrigeration oil are saved and the refrigeration system (**1**) is operated efficiently with a minimum amount of the refrigeration oil.

According to the fifth aspect of the invention, the pressure reducing means (**71**) is provided on the discharge side of the low stage compressor (**55**) and the pressure in the suction side of the high stage compressors (**11, 12**) is made lower than the pressure in the dome of the low stage compressor (**55**). Further, the oil return path (**72**) is connected to the dome of the low stage compressor (**55**) at one end and to the suction side of the high stage compressors (**11, 12**) by bypassing the pressure reducing means (**71**) at the other end. As a result, the refrigeration oil accumulated in the dome of the low stage compressor (**55**) is returned to the high stage compressors (**11, 12**). With such a simple structure, time and effort to additionally fill the refrigeration oil are saved and the refrigeration system (**1**) is operated efficiently with a minimum amount of the refrigeration oil.

According to the sixth aspect of the invention, even if the plurality of low stage compressors (**55a, 55b, 55c**) are provided, the oil return means (**70**) returns the refrigeration oil from one of the low stage compressors (**55a**) to the high stage compressors (**11, 12**). The one of the low stage compressors (**55a**) is in charge of returning the refrigeration oil to the high stage compressors (**11, 12**). That is, it is no longer necessary to return the refrigeration oil from each of the low stage compressors (**55a, 55b, 55c**) to the high stage compressors (**11, 12**). Thus, the oil return means (**71**) is achieved with a simple structure.

According to the seventh aspect of the invention, the pressure reducing means **(71)** is provided closer to the high stage compressors (**11, 12**) than to the oil separator (**64**) and the pressure in the suction side of the high stage compressors (**11, 12**) is made lower than the pressure in the oil separator (**64**). Further, the oil return path (**72**) is connected to the oil separator (64) at one end and to the suction side of the high stage compressors (**11**, **12**) by bypassing the pressure reducing means (**71**) at the other end. As a result, the refrigeration oil trapped in the oil separator (**64**) is returned to the high stage compressors (**11, 12**). With such a simple structure, time and effort to additionally fill the refrigeration oil are saved and the refrigeration system (**1**) is operated efficiently with a minimum amount of the refrigeration oil.

### BRIEF DESCRIPTION OF DRAWINGS

[Figure **1**] Figure **1** is a refrigerant circuit diagram of a refrigeration system according to an embodiment of the present invention.
[Figure **2**] Figure **2** is an enlargement of an oil return means.
[Figure **3**] Figure **3** is a Mollier chart of a refrigeration cycle according to the embodiment.
[Figure **4**] Figure **4** is a refrigerant circuit diagram of a refrigeration system according to a first modification of the embodiment of the present invention.
[Figure **5**] Figure **5** is a refrigerant circuit diagram of a refrigeration system according to a second modification of the embodiment of the present invention.
[Figure **6**] Figure **6** is a refrigerant circuit diagram of a refrigeration system according to a third modification of the embodiment of the present invention.
[Figure **7**] Figure **7** is a refrigerant circuit diagram of a refrigeration system according to the third modification of the embodiment of the present invention.

### EXPLANATION OF REFERENCE NUMERALS

- 6: Refrigerant circuit
- 11: First compressor (high stage compressor)
- 12: Second compressor (high stage compressor)
- 55: Freezer compressor (low stage compressor)
- 55 a: First freezer compressor (low stage compressor)
- 55b: Second freezer compressor (low stage compressor)
- 55c: Third freezer compressor (low stage compressor)
- 64: Oil separator
- 67a: First oil equalizing pipe (oil delivery path)
- 67b: Second oil equalizing pipe (oil delivery path)
- 70: Oil return means
- 71: Pressure regulating valve (pressure reducing means)
- 72: Oil return path

### BEST MODE FOR CARRYING OUT THE INVENTION

Hereinafter, explanation of an embodiment of the present invention is provided with reference to the drawings. The following embodiment is given as a preferable example of the present invention and does not limit the invention and the scope of application and use thereof.

### -Structure of Refrigeration System-

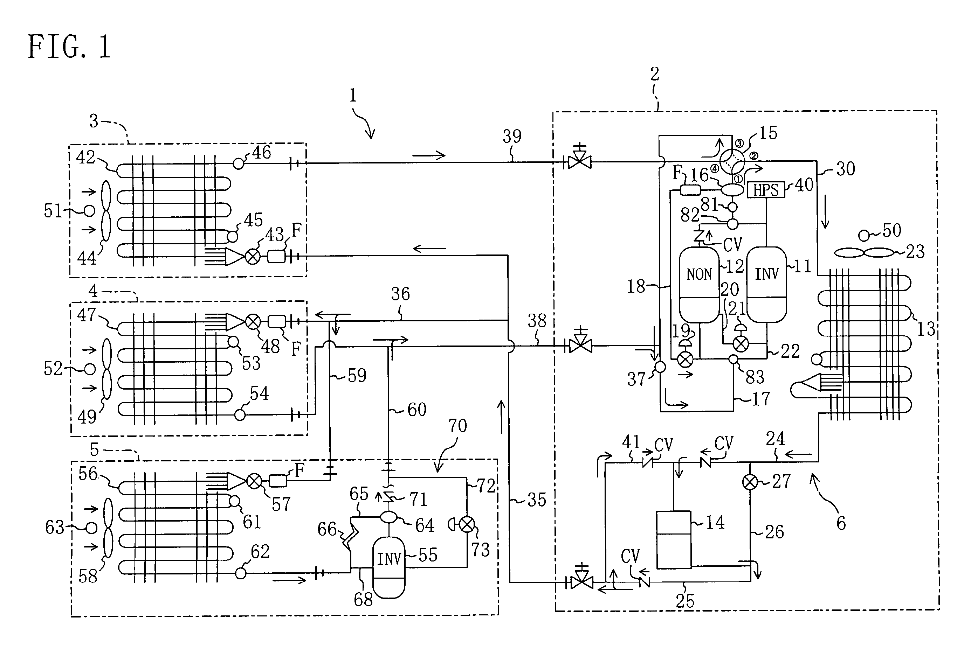

As shown in FIG. **1**, a refrigeration system (**1**) of the present embodiment is used for room air conditioning, as well as cold storage and freezing of food and drink. For example, it is used in convenience stores. The refrigeration system (**1**) includes a refrigerant circuit (**6**) realized by connecting an outdoor unit (**2**), an indoor unit (**3**), a cold storage unit (**4**) and a freezer unit (**5**).

The outdoor unit (**2**) includes first and second compressors (**11, 12**), an outdoor heat exchanger (**13**) and a receiver (**14**). The first and second compressors (**11, 12**) are connected parallel to each other and serve as high stage compressors. The first compressor (**11**) is an inverter compressor capable of varying the capacity. The second compressor (**12**) is a non-inverter compressor whose capacity is fixed. A four-pass switching valve (**15**) is provided on the discharge side of the compressors (**11, 12**). Discharge pipes of the compressors (**11, 12**) are connected to a first port of the four-pass switching valve (**15**). An oil separator (**16**), a temperature sensor (**81**) and a pressure sensor (**82**) are provided between the compressors (**11, 12**) and the four-pass switching valve (**15**). The discharge pipe of the first compressor (11) has a high pressure switch (40). The first and second compressors **(11, 12)** have a suction pipe **(17),** on which a pressure sensor **(83)** is provided. An oil return pipe (18) connects the suction pipe (17) to the oil separator (16) and has a solenoid valve **(19).** An oil equalizing pipe **(20)** of the compressors (**11, 12**) is connected to the side of the second compressor (**12**) at one end and to the suction pipe (**22**) of the first compressor (**11**) at the other end. The oil equalizing pipe (**20**) has a solenoid valve (**21**).

The outdoor heat exchanger (**13**) is connected to a second port of the four-pass switching valve (**15**) via a refrigerant pipe (**30**) at one end and to the receiver (**14**) via a refrigerant pipe (**24**) at the other end. A liquid pipe (**25**) of the receiver (**14**) is connected to the refrigerant pipe (**24**) via a bypass pipe (**26**). The bypass pipe (**26**) is provided with an electronic expansion valve (**27**).

The liquid pipe (**25**) of the receiver (**14**) is connected to a refrigerant pipe (**35**) extending to the outside of the outdoor unit (**2**). The refrigerant pipe (**35**) is connected to an end of the refrigerant pipe (**24**) closer to the receiver (**14**) via a refrigerant pipe (**41**). The refrigerant pipes (**41**) and (**24**) are provided with check valves (**CV**) for blocking a flow of refrigerant from the receiver (**14**), respectively.

The suction pipe (**17**) of the compressors (**11, 12**) is connected to a third port of the four-pass switching valve (**15**). The suction pipe (**17**) is provided with a temperature sensor (37). A refrigerant pipe (38) extending to the outside of the outdoor unit (2) is connected to part of the suction pipe (17) between the four-pass switching valve (15) and the temperature sensor (37).

A fourth port of the four-pass switching valve (15) is connected to a refrigerant pipe (39) extending to the outside of the outdoor unit (2). The four-pass switching valve (15) is switchable between the first and second states described below. In the first state, the first and second ports are communicated with each other, and so are the third and fourth ports. In the second state, the first and fourth ports are communicated with each other, and so are the second and third ports.

The outdoor unit (2) further includes an outdoor fan (23) for feeding air to the outdoor heat exchanger (13) and a temperature sensor (50) for sensing the temperature of outside air.

An indoor unit (3) performs indoor air conditioning and includes an indoor heat exchanger (42), an indoor electronic expansion valve (43) and an indoor fan (44). The indoor heat exchanger (42) is connected to the refrigerant pipe (39) at one end, and to the refrigerant pipe (35) at the other end. The indoor electronic expansion valve (43) is provided in the refrigerant pipe (35). The indoor heat exchanger (42) and the refrigerant pipe (39) are provided with temperature sensors (45) and (46), respectively. A temperature sensor (51) is provided to sense the temperature of indoor air.

The cold storage unit **(4)** is used to keep food and drink in cold storage and includes a cold storage cooling coil (47), a cold storage electronic expansion valve (48) and a cold storage fan (49). The cold storage cooling coil (47) is connected to a refrigerant pipe (36) which is joined with the refrigerant pipe (35) at one end, and to the refrigerant pipe (38) at the other end. The cold storage electronic expansion valve (48) is provided in the refrigerant pipe (36). The cold storage cooling coil (47) and the refrigerant pipe (38) are provided with temperature sensors (53) and (54), respectively. The cold storage unit (4) further includes a temperature sensor (52) for sensing the temperature in a cold storage chamber.

The freezer unit (**5**) is used to freeze food and drink and includes a freezer compressor (**55**) serving as a low stage compressor, a freezer cooling coil (**56**), a freezer electronic expansion valve (**57**) and a freezer fan (**58**). The freezer unit (**5**) is connected to a refrigerant pipe (**59**) branched from the refrigerant pipe (**36**) and a refrigerant pipe (**60**) branched from the refrigerant pipe (**38**). The freezer electronic expansion valve (**57**), the freezer cooling coil (**56**) and the freezer compressor (**55**) are connected in this order. The freezer electronic expansion valve (**57**) is connected to the refrigerant pipe (**59**) and the discharge side of the freezer compressor (**55**) is connected to the refrigerant pipe (**60**). A temperature sensor (**61**) is provided in the freezer cooling coil (**56**) and a temperature sensor (**62**) is provided in a pipe on the exit side of the freezer cooling coil (**56**) (i.e., a pipe between the freezer cooling coil (**56**) and the freezer compressor (**55**)). The freezer unit (**5**) further includes a temperature sensor (**63**) for sensing the temperature in a freezer chamber.

The freezer compressor (**55**) is a high-pressure dome type inverter compressor capable of varying the volume. The freezer compressor (**55**) has an oil separator (**64**) on a discharge pipe thereof. The oil separator (**64**) has an oil return pipe (**65**), which is connected to a suction pipe (**68**) of the freezer compressor (**55**). The oil return pipe (**65**) is provided with a capillary tube (**69**) serving as a pressure reducing system. Refrigerant sucked into the dome of the freezer compressor (**55**) through the suction pipe (**68**) is compressed by a compressor mechanism (not shown) in the dome and discharged in space inside the dome. Therefore, the dome becomes a high pressure part as the high pressure refrigerant is discharged therein. The freezer compressor (**55**) is configured to accumulate refrigeration oil at the bottom of the high pressure dome.

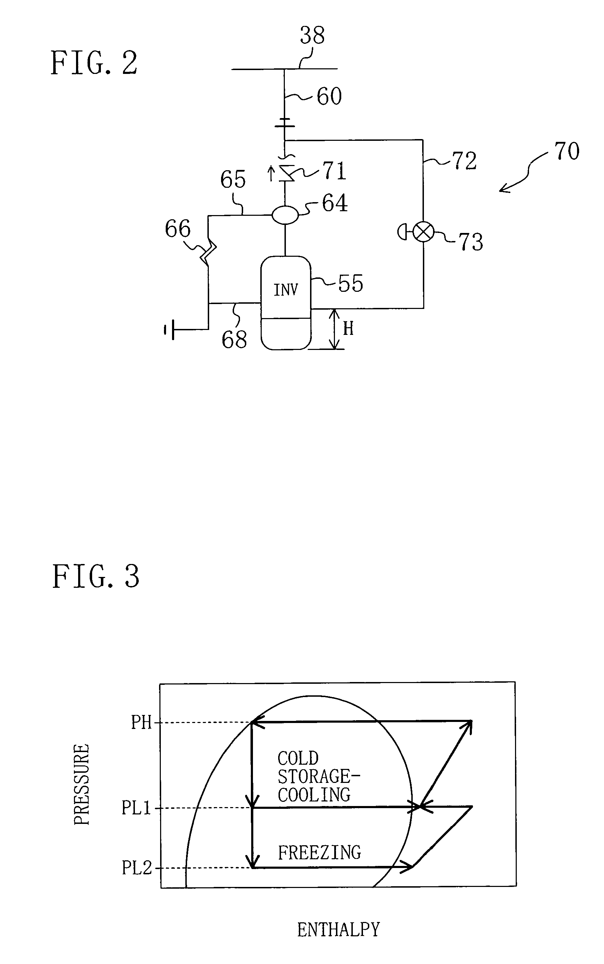

As shown in an enlargement of Figure 2, a pressure regulating valve (**71**) serving as a pressure reducing means is provided in part of the discharge pipe of the freezer compressor (**55**) downstream of the oil separator (**64**). This configuration is a characteristic feature of the present invention. Refrigerant discharged from the freezer compressor (**55**) is reduced in pressure when it passes through the pressure regulating valve (**71**). Therefore, the pressure becomes lower in the suction side of the first and second compressors (**11, 12**) than in the dome of the freezer compressor (**55**). The pressure reducing means may be realized by, for example, a capillary tube, an oil separator, a filter, a muffler, a check valve, a long pipe or the like in place of the pressure regulating valve (**71**), as long as it functions as resistance against the refrigerant flow.

An oil return path (**72**) is connected to a certain position of the dome of the freezer compressor (**55**) at one end such that the level of the refrigeration oil in the dome corresponds to a predetermined height H. The other end of the oil return path (**72**) bypasses the pressure regulating valve (**71**) and is connected to the refrigerant pipe (**60**). The oil return path (**72**) has a solenoid valve (**73**). The pressure regulating valve (**71**) and the oil return path (**72**) function as an oil return means (**70**) of the present invention.

In Figure 1, (**CV**) and (**F**) represent check valves and filters, respectively.

### -Operation of Refrigeration System-

In cooling operation, the four-pass switching valve **(15)** enters the first state where the first and second ports are communicated with each other, and so are the third and fourth ports. The electronic expansion valve (**27**) of the outdoor unit (**2**) is fully opened. Accordingly, refrigerant in the refrigerant circuit (**6**) flows along the arrows depicted in Figure 1. Explanation of heating operation is omitted from the description.

More specifically, the refrigerant discharged from the compressors (**11, 12**) is condensed in the outdoor heat exchanger (**13**) and flows into the receiver (**14**). The refrigerant in the receiver (**14**) flows out of the outdoor unit (**2**), and is branched into the indoor unit (**3**), the cold storage unit (**4**) and the freezer unit (**5**). The refrigerant entered the indoor unit (**3**) is reduced in pressure as it passes through the indoor electronic expansion valve (**43**) and then evaporated in the indoor heat exchanger (**42**), thereby cooling the indoor air. The refrigerant entered the cold storage unit (**4**) is reduced in pressure to first predetermined pressure PLl as it passes through the cold storage electronic expansion valve (**48**) (see Figure 3), and then evaporated in the cold storage cooling coil (**47**), thereby cooling the air in the cold storage chamber.

Further, the refrigerant entered the freezer unit (**5**) is reduced in pressure down to second predetermined pressure PL2 which is lower than the first predetermined pressure PL1 as it passes through the freezer electronic expansion valve (**57**). The refrigerant with reduced pressure is evaporated in the freezer cooling coil (**56**), thereby cooling the air in the freezer chamber. The refrigerant flows from the freezer cooling coil (**56**) to the freezer compressor (**55**), where the refrigerant pressure is increased to the first predetermined pressure PL1. Then, the refrigerant flows into the outdoor unit (**2**) together with the refrigerant flowing from the cold storage cooling coil (**47**). The refrigerant entered the outdoor unit (**2**) is sucked into the compressors (**11, 12**) together with the refrigerant flowing back to the outdoor unit (**2**) from the indoor unit (**3**).

The refrigerant sucked into the compressors (**11, 12**) is compressed by the compressors (**11, 12**). After that, the above-described circulation is repeated. In this operation, a two-stage compression refrigeration cycle as shown in Figure 3 is achieved in the refrigerant circuit (**6**).

In the freezer unit (**5**), the refrigeration oil trapped in the oil separator (**64**) is returned to the suction pipe (**68**) via the oil return path (**65**), and then collected in the freezer compressor (**55**).

By the effect of the pressure regulating valve (**71**), the pressure is in the suction side of the high stage compressors (**11, 12**) becomes lower than that in the dome of the low stage compressor (**55**). Therefore, when the solenoid valve (**73**) is opened, the refrigeration oil which is accumulated in the dome over the predetermined height H is ejected to the suction side of the first and second compressors (**11, 12**) through the oil return path (**72**) bypassing the pressure regulating valve (**71**). Thus, the level of the refrigeration oil in the dome of the freezer compressor (**55**) is maintained not to exceed the predetermined height H. Further, the first and second compressors (**11, 12**) are prevented from being short of the refrigeration oil.

### -Effect of the Embodiment-

According to the present embodiment, the oil return means (**70**) makes it possible to return the refrigeration oil accumulated in the dome of the freezer compressor (**55**) to the first and second compressors (**11, 12**). Therefore, the first and second compressors (**11, 12**) will never be short of the refrigeration oil, thereby eliminating the need of filling additional refrigeration oil and saving time and effort to fill the refrigeration oil. Further, since the refrigeration oil is prevented from being accumulated in the freezer compressor (**55**) over the predetermined height H, rotational resistance caused by the refrigeration oil in the freezer compressor (**55**) is reduced. Thus, the system is operated with improved efficiency.

The pressure regulating valve (**71**) is provided on the discharge side of the freezer compressor (**55**) and the pressure on the suction side of the first and second compressors (**11, 12**) is made lower than the pressure in the dome of the freezer compressor (**55**). Further, the oil return path (**72**) is connected to the dome of the freezer compressor (**55**) at one end and to the suction side of the first and second compressors (**11, 12**) at the other end. As a result, the refrigeration oil accumulated in the dome of the freezer compressor (**55**) is returned to the first and second compressors (**11, 12**). With such a simple structure, time and effort to fill the refrigeration oil are saved and the refrigeration system is operated efficiently with a minimum amount of the refrigeration oil.

### -First Modification of Embodiment-

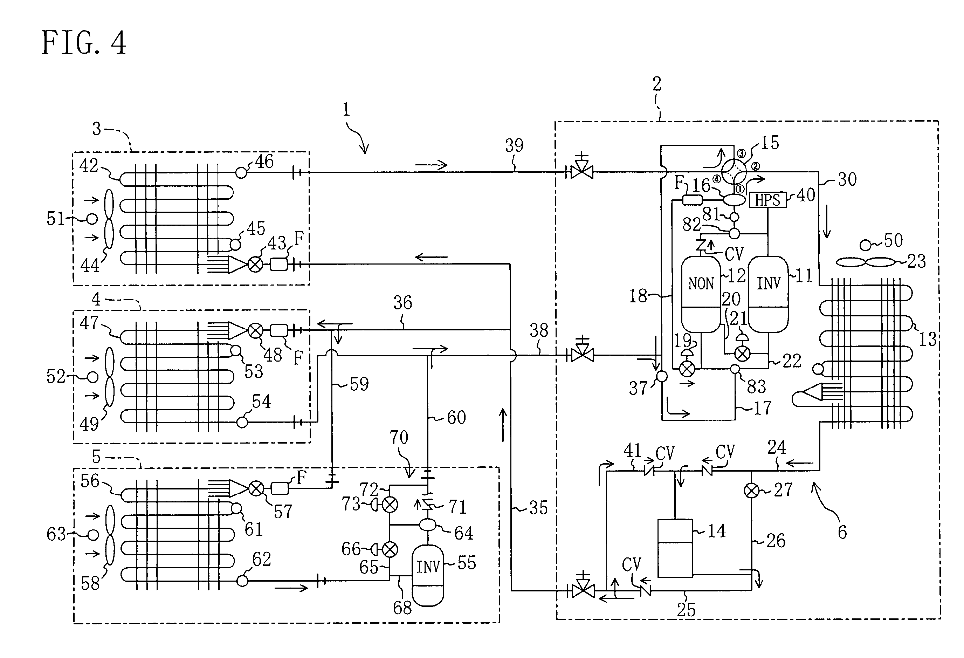

Explanation of a first modification of the embodiment is provided below. Figure 4 shows a refrigeration circuit diagram of a refrigeration system (**1**) according to the first modification. The refrigeration system (**1**) of the first modification is different from that the above-described embodiment in that the oil return path (**72**) is connected to a different part of the freezer compressor (**55**).

More specifically, the oil return path (**72**) is connected to the oil return pipe (**65**) connected to the oil separator (**64**) at one end and to the refrigerant pipe (**60**) by bypassing the pressure regulating valve (**71**) at the other end. The oil return path (**72**) is provided with a solenoid valve (**73**) in the same manner as the above embodiment. Further, the oil return pipe (**65**) is also provided with a solenoid valve (**66**), which is different from the above embodiment.

According to the first modification, the solenoid valve (**66**) of the oil return pipe (**65**) and the solenoid valve (**73**) of the oil return path (**72**) are controlled such that the refrigeration oil trapped in the oil separator (**64**) is returned to either the freezer compressor (**55**) or the first and second compressors (**11, 12**). More specifically, when the refrigeration oil is returned from the oil separator (**64**) to the freezer compressor (**55**), the solenoid valve (**66**) of the oil return pipe (**65**) is opened and the solenoid valve (**73**) of the oil return path (**72**) is closed. On the other hand, when the refrigeration oil is returned from the oil separator (**64**) to the first and second compressors (**11, 12**), the solenoid valve (**66**) of the oil return pipe (**65**) is closed and the solenoid valve (**73**) of the oil return path (**72**) is opened.

### -Second Modification of Embodiment-

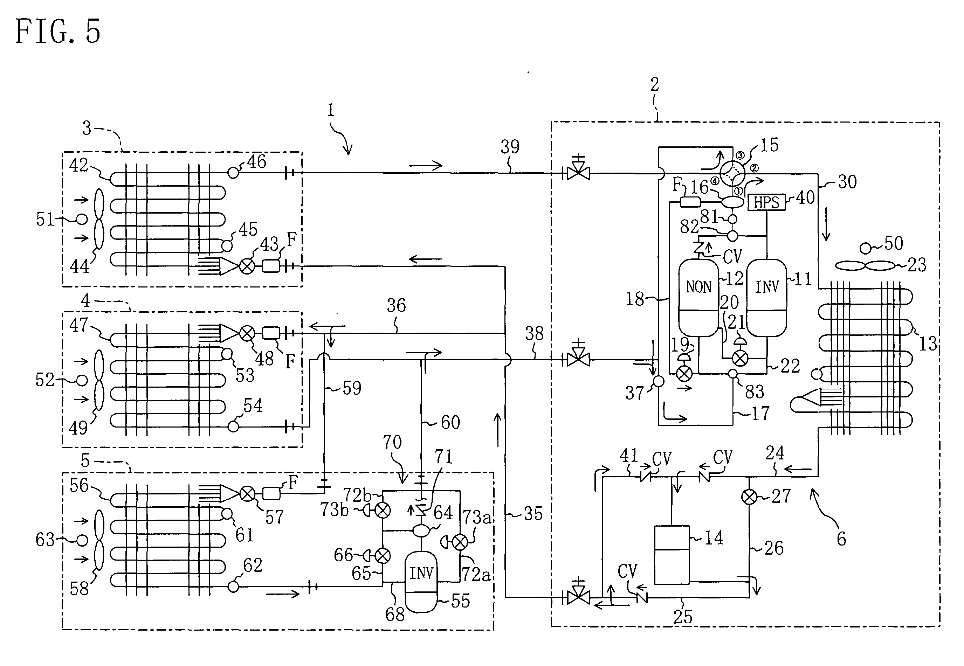

Explanation of a second modification of the present embodiment is provided below. Figure 5 shows a refrigeration circuit diagram of a refrigeration system (**1**) according to the second modification. In the refrigeration system (**1**) of the second modification, the oil return means (**70**) includes a first oil return path (**72a**) and a second oil return path (**72b**). The first oil return path (**72a**) is connected to the freezer compressor (**55**) in the same manner as the oil return path of the above-described embodiment, while the second oil return path (**72b**) is connected to the freezer compressor (**55**) in the same manner as the oil return path of the first modification.

According to the second modification, the refrigeration oil is usually returned from the freezer compressor (**5**) to the first and second compressors (**11, 12**) through the first oil return path (**72a**) as the oil return means (**70**). That is to say, a solenoid valve (**73a**) of the first oil return path (**72a**) is opened, while a solenoid valve (**73b**) of the second oil return path (**72b**) is closed. The second oil return path (**72b**) is used when the solenoid valve (**73a**) of the first oil return path (**72a**) fails to operate properly.

### -Third Modification of Embodiment-

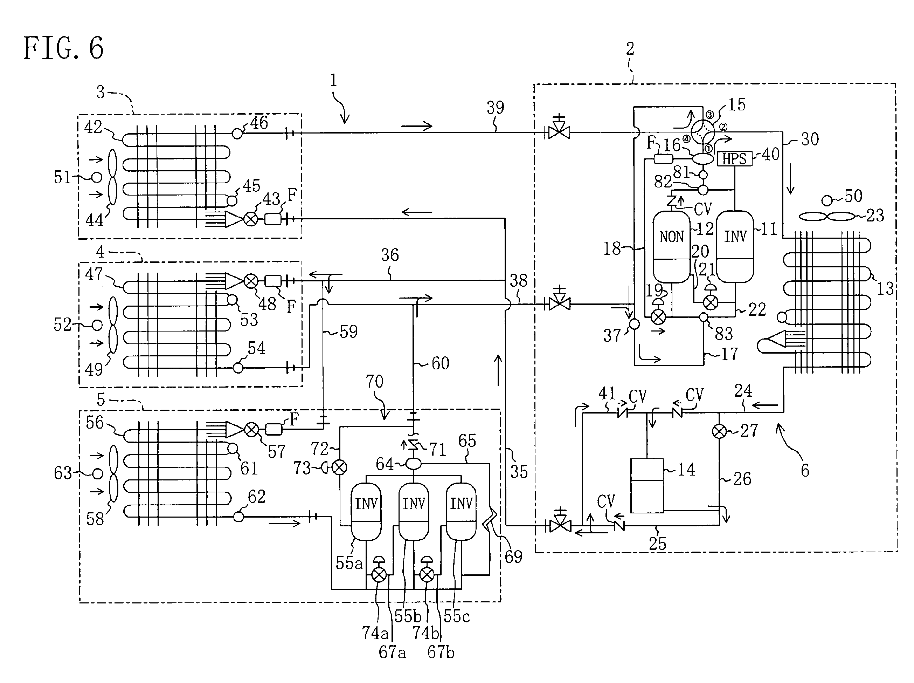

Explanation of a third modification of the embodiment is provided. Figure **6** shows a refrigeration circuit diagram of a refrigeration system (**1**) according to the third modification. Different from the above embodiment, the refrigeration system (**1**) of the third modification includes a plurality of freezer compressors (**55a, 55b, 55c**) as the low stage compressor of the freezer unit (**5**). In the third modification, three freezer compressors (**55a, 55b, 55c**) are provided in the refrigerant circuit (**6**). However, the number of the freezer compressors (**55a, 55b, 55c**) is given as an example. Therefore, two or four or more freezer compressors (**55a, 55b, 55c**) may be provided in the refrigerant circuit (**6**).

More specifically, the freezer unit (**5**) includes a first freezer compressor (**55a**), a second freezer compressor (**55b**) and a third freezer compressor (**55c**) arranged parallel to each other between the freezer condenser (**56**) and the oil separator (**64**). Refrigerant pipes of the freezer compressors (**55a, 55b, 55c**) on the discharge side are joined together and connected to the oil separator (**64**). Refrigerant pipes, which are branched from the suction pipe (**68**) connected to the freezer condenser (**56**) at one end, are connected to the suction side of the freezer compressors (**55a, 55b, 55c**).

Referring to Figure **6**, the first freezer compressor (**55a**) on the left side has a refrigerant pipe on the suction side thereof connected to a dome of the second freezer compressor (**55b**) located in the middle with a first oil equalizing pipe (**67a**). The second freezer compressor (**55b**) has a refrigerant pipe on the suction side thereof connected to a dome of the third freezer compressor (**55c**) on the right side with a second oil equalizing pipe (**67b**). The oil equalizing pipes (**67a, 67b**) function as an oil return path for returning the refrigeration oil from the second and third freezer compressors (**55b, 55c**) to the first freezer compressor (**55a**). The oil equalizing pipes (**67a, 67b**) are connected to certain positions of the domes of the second and third freezer compressors (**55b, 55c**), respectively, such that the level of the refrigeration oil in the dome corresponds to the predetermined height H. The oil equalizing pipes (**67a, 67b**) are provided with solenoid valves (**74a, 74b**), respectively.

An oil return path (**72**) is connected to a dome of the first freezer compressor (**55a**), which is a low stage compressor in charge of returning the refrigeration oil to the high stage compressor. In the same manner as the above embodiment, the oil return path (**72**) is connected to a certain position of the first freezer compressor (**55a**) at one end such that the level of the refrigeration oil in the dome corresponds to the predetermined height H. The other end of the oil return path (**72**) bypasses the pressure regulating valve (**71**) and is connected to the refrigerant pipe (**60**).

The oil return pipe (**65**) is connected to the refrigerant pipe on the suction side of the third freezer compressor (**55c**). The refrigeration oil separated from the refrigerant in the oil separator (**64**) is sent to the refrigerant pipe on the suction side of the third freezer compressor (**55c**) through the oil return pipe (**65**), and then sucked into the third freezer compressor (**55c**) together with the refrigerant.

According to the third modification, the amounts of the refrigeration oil in the freezer compressors (**55a, 55b, 55c**) are equalized using the solenoid valves (**74a, 74b**). When the solenoid valve (**74b**) of the second oil equalizing pipe (**67b**) is opened, the refrigeration oil accumulated in the dome of the third freezer compressor (**55c**) over the predetermined height H flows into the refrigerant pipe on the suction side of the second freezer compressor (**55b**) through the second oil equalizing pipe (**67b**), and is sucked into the second freezer compressor (**55b**) together with the refrigerant. On the other hand, when the solenoid valve (**74a**) of the first oil equalizing pipe (**67a**) is opened, the refrigeration oil accumulated in the dome of the second freezer compressor (**55b**) over the predetermined height H flows into the refrigerant pipe on the suction side of the first freezer compressor (**55a**) through the first oil equalizing pipe (**67a**), and is sucked into the first freezer compressor (**55a**) together with the refrigerant.

Further, according to the third modification, in the same manner as the above embodiment, the solenoid valve (**73**) of the oil return path (**72**) is used to return the refrigeration oil from the first freezer compressor (**55a**) to the first and second compressors (**11, 12**). When the solenoid valve (**73**) is opened, the refrigeration oil accumulated in the dome of the first freezer compressor (**55a**) over the predetermined height H flows into the oil return path (**72**) bypassing the pressure regulating valve (**71**) and sent to the suction side of the first and second compressors (**11, 12**).

According to the third modification, as described above, the refrigeration oil accumulated in the domes of the second and third freezer compressors (**55b, 55c**) is collected in the first freezer compressor (**55a**), and then returned to the first and second compressors (**11, 12**) as the high stage compressors.

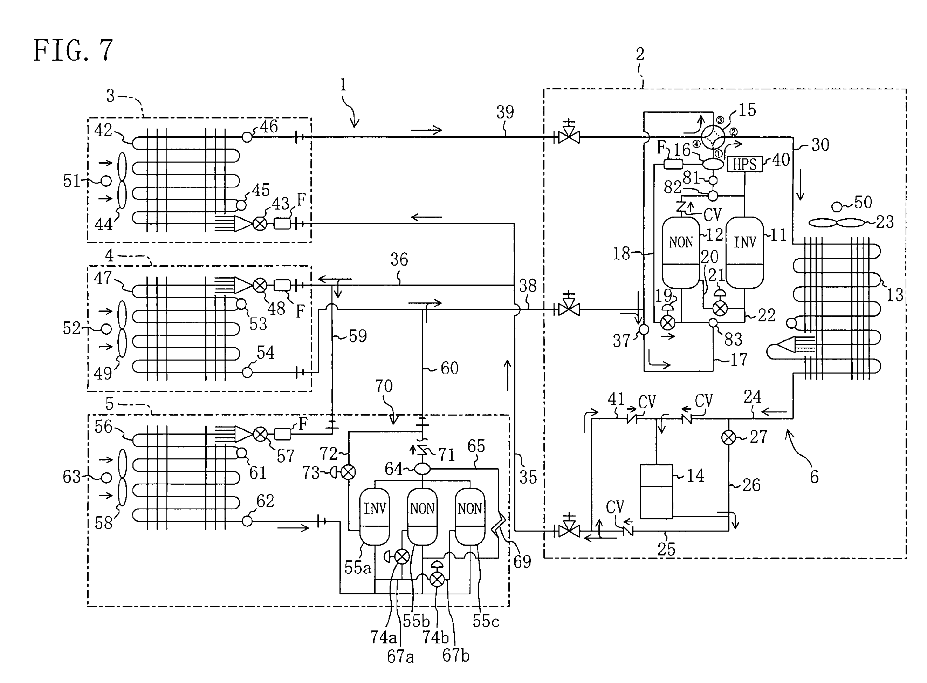

In the present modification, the oil return pipe (**65**) may be connected to the refrigerant pipe on the suction side of the second freezer compressor (**55b**) as shown in Figure **7**. In the refrigerant circuit (**6**) shown in Figure 7, the second and third freezer compressors (**55b, 55c**) are constant-speed compressors whose volume is fixed. Further, an end of the second oil equalizing pipe (**67b**) on the discharge side is connected to part of the first oil equalizing pipe (**67a**) downstream of the solenoid valve (**74a**). When the solenoid valve (**74a**) of the first oil equalizing pipe (**67a**) is opened, the refrigerant oil accumulated in the dome of the second freezer compressor (**55b**) is sent to the suction side of the first freezer compressor (**55a**). On the other hand, when the solenoid valve (**74b**) of the second oil equalizing pipe (**67b**) is opened, the refrigeration oil accumulated in the dome of the third freezer compressor (**55c**) is sent to the suction side of the first freezer compressor (**55a**). Further, the refrigeration oil separated from the refrigerant in the oil separator (**64**) flows into the refrigerant pipe on the suction side of the second freezer compressor (**55b**) through the oil return pipe (**65**) and is sucked into the second freezer compressor (**55b**) together with the refrigerant.

### -Other Embodiments-

The above-described embodiment of the present invention may be configured as follows.

In the present embodiment, the refrigeration system (**1**) includes the refrigerant circuit (**6**) realized by connecting the outdoor unit (**2**), the indoor unit (**3**), the cold storage unit (**4**) and the freezer unit (**5**). However, the present invention is also applicable to any refrigeration system as long as it includes a refrigerant circuit (**6**) including a low stage compressor (**55**) and high stage compressors (**11, 12**) which are connected in series to perform the two-stage compression refrigeration cycle.

### INDUSTRIAL APPLICABILITY

Thus, as described above, the present invention is useful as a refrigeration system which includes a refrigeration circuit capable of performing a two-stage compression refrigeration cycle and is generally used in convenience stores and supermarkets.

## Claims

1. A refrigeration system having a refrigerant circuit (**6**) including a low stage compressor (**55**) and high stage compressors (**11, 12**) which are connected in series to perform a two-stage compression refrigeration cycle, wherein
the refrigeration system (**1**) comprises an oil return means (**70**) for returning refrigeration oil from the low stage compressor (**55**) to the high stage compressors (**11, 12**).

2. The refrigeration system of Claim 1, wherein
the low stage compressor (**55**) is configured to accumulate the refrigerant oil in a high-pressure part thereof and
the oil return means (**70**) is configured to return the refrigeration oil accumulated in the high-pressure part of the low stage compressor (**55**) to the high stage compressors (**11, 12**).

3. The refrigeration system of Claim 2, wherein
the oil return means (**70**) is provided on the discharge side of the low stage compressor (**55**) and includes a pressure reducing means (**71**) and an oil return path (**72**),
the pressure reducing means (**71**) making the pressure in the suction side of the high stage compressors (**11, 12**) lower than the pressure in the high-pressure part of the low stage compressor (**55**) and
the oil return path (**72**) being connected to the high pressure part of the low stage compressor (**55**) at one end and to the suction side of the high stage compressors (**11, 12**) by bypassing the pressure reducing means (**71**) at the other end.

4. The refrigeration system of Claim 1, wherein
the low stage compressor (**55**) is configured to accumulate the refrigeration oil in a dome thereof where the pressure is high and
the oil return means (**70**) is configured to return the refrigeration oil accumulated in the dome of the low stage compressor (**55**) to the high stage compressors (**11, 12**).

5. The refrigeration system of Claim 4, wherein
the oil return means (**70**) is provided on the discharge side of the low stage compressor (**55**) and includes a pressure reducing means (**71**) and an oil return path (**72**),
the pressure reducing means (**71**) making the pressure in the suction side of the high stage compressors (**11, 12**) lower than the pressure in the dome of the low stage compressor (**55**) and
the oil return path (**72**) being connected to the dome of the low stage compressor (**55**) at one end and to the suction side of the high stage compressors (**11, 12**) by bypassing the pressure reducing means (**71**) at the other end.

6. The refrigeration system of Claim 2, 3, 4 or 5, wherein
the low stage compressor (**55**) includes a plurality of low stage compressors (**55a, 55b, 55c**) connected parallel to each other,
the oil return means (**70**) is configured to return the refrigeration oil from one of the low stage compressors (**55a**) to the high stage compressors (**11, 12**), the one of the low stage compressors (**55a**) being in charge of returning the refrigeration oil to the high stage compressors (**11, 12**), and
the oil return means (**70**) includes oil delivery paths (**67a, 67b**) for sending the refrigeration oil to the low stage compressor (**55a**) in charge from the other low stage compressors (**55b, 55c**) than the low stage compressor (**55a**) in charge.

7. The refrigeration system of Claim 1, wherein
an oil separator (**64**) is provided on the discharge side of the low stage compressor (**55**) to trap the refrigeration oil discharged from the low stage compressor (**55**) and
the oil return means (**70**) includes a pressure reducing means (**71**) and an oil return path (**72**),
the pressure reducing means (**71**) being closer to the high stage compressors (**11**, **12**) than to the oil separator (**64**) to make the pressure in the suction side of the high stage compressors (**11, 12**) lower than the pressure in the oil separator (**64**) and
the oil return path (**72**) being connected to the oil separator (**64**) at one end and to the suction side of the high stage compressors (**11, 12**) by bypassing the pressure reducing means (**71**) at the other end.
